**Europäisches Patentamt**

**European Patent Office**

**Office européen des brevets**

(19)

(11) Veröffentlichungsnummer : **0 071 848**
**B1**

# (12) EUROPÄISCHE PATENTSCHRIFT

(45) Veröffentlichungstag der Patentschrift :
26.03.86

(51) Int. Cl.⁴ : **G 01 P 13/04**

(21) Anmeldenummer : **82106688.3**

(22) Anmeldetag : **23.07.82**

(54) **Einrichtung zum Erzeugen einer der Drehzahl und Drehrichtung eines Gleichstromantriebes entsprechenden Spannung.**

(30) Priorität : 07.08.81 DE 3131438

(43) Veröffentlichungstag der Anmeldung :
16.02.83 Patentblatt 83/07

(45) Bekanntmachung des Hinweises auf die Patenterteilung : 26.03.86 Patentblatt 86/13

(84) Benannte Vertragsstaaten :
FR GB IT

(56) Entgegenhaltungen :
CH-A-    529 352
US-A- 4 006 417
US-A- 4 091 314
ATM ARCHIV FÜR TECHNISCHES MESSEN, V145-12, Nr. 341, Juni 1964, Seiten 121-122, München (DE); F. KOPPITZ: " Drehzahlmessung mit gleichzeitiger Anzeige der Drehrichtung "

(73) Patentinhaber : **Siemens Aktiengesellschaft**
**Berlin und München Wittelsbacherplatz 2**
**D-8000 München 2 (DE)**

(72) Erfinder : **Bachmann, Gerhard**
**Paul-Gossen-Strasse 119**
**D-8520 Erlangen (DE)**
Erfinder : **Zimmermann, Horst**
**Noether Strasse 20**
**D-8520 Erlangen (DE)**

EP 0 071 848 B1

## Beschreibung

Die Erfindung betrifft eine Einrichtung zum Erzeugen einer der Drehzahl eines Gleichstromantriebes proportionalen Spannung, die ihr Verzeichen je nach der Drehrichtung des Antriebes wechselt, insbesondere für einen Hauptspindelantrieb bei einer Werkzeugmaschine, mittels einer mit dem Antrieb gekuppelten Mehrphasen-Tachometermaschine.

Es ist bereits eine Drehzahlmessung mit gleichzeitiger Anzeige der Drehrichtung bekannt, bei der die aus einem Zweiphasengenerator mit Permanentmagnetrotor entnommenen Statorspannungen derart über Blindwiderstände auf ein Doppeldrehstrominstrument geschaltet werden, daß Ausschlagsrichtung und Amplitude des Instrumentes als Indiz für die vorgenannten Größen dienen können (vgl. Archiv für technisches Messen, Juni 1964, Seiten 121 bis 122).

Diese Schaltungen haben sich bei hochgenauen Gleichstromantrieben, vor allem bei Werkzeugmaschinen — vermutlich wegen der diesem Verfahren innewohnenden Ungenauigkeit — nicht eingeführt. Hier werden nach wie vor im allgemeinen mit dem Motor gekuppelte Gleichstrom- Tachometermaschinen benutzt, die vor allem von der Wartung und Standzeit her oft mit Problemen behaftet sind, da Bürsten und Kommutatoren verschleißen.

Eine Vorrichtung zur Bestimmung der Drehzahl eines Rotors, die eine Phasenfolgelogik zur Bestimmung der Drehrichtung des Rotors aufweist, ist aus der CH-A-529 352 bekannt. Die EP-A-0 071 866 mit Anmeldetag 26.07.82 und Priorität 07.08.81 bezieht sich auf eine Einrichtung zum Erzeugen einer Drehzahl proportionalen Spannung.

Die Aufgabe der vorliegenden Erfindung besteht darin, eine Einrichtung der eingangs genannten Art, vor allem für Hauptspindelantriebe zu schaffen, mit der eine sehr präzise und einfache, verschleiß- und wartungsfreie Erfassung von Drehzahl und Drehrichtung mittels einer bürstenlosen Mehrphasen-Tachometermaschine möglich ist.

Diese Aufgabe wird erfindungsgemäß durch einen an die Statorwicklungen der Tachometermaschine angeschlossenen ersten Rechteckimpulsformer, einen ihm nachgeschalteten Frequenzspannungswandler, einen an den Frequenzspannungswandler angeschlossenen, durch elektronische Schalter einschaltbaren oder umgehbaren Umkehrverstärker, einen zweiten, ebenfalls an die Statorwicklungen angeschlossenen Rechteckimpulsformer und eine ihm nachgeschaltete Phasenfolgelogik zur Ansteuerung der elektronischen Schalter gelöst.

Um die Genauigkeit der Anordnung zu erhöhen, kann dabei zwischen Rechteckimpulsformer und Frequenzspannungswandler noch eine Frequenzvervielfacher-Schaltung angeordnet werden.

Anhand eines Ausführungsbeispieles sei die Erfindung näher erläutert ;
es zeigen :

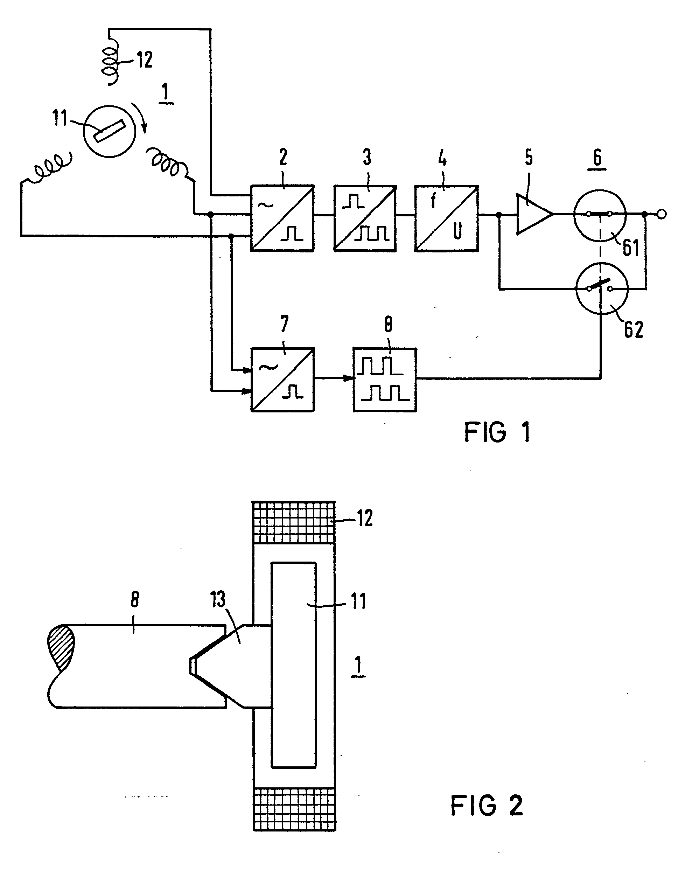

Figur 1 das Prinzipschaltbild der Anordnung und
Figur 2 den mechanischen Aufbau.

Über eine Konussteckverbindung 13 ist mit der Motorwelle 8 des nichtgezeigten Hauptspindelantriebes der Rotor 11 einer Drehstromtachometermaschine gekuppelt. Der Rotor 11 umfaßt einen Permanentmagneten, der in den um 120° auseinanderliegenden vergossenen Statorwicklungen 12 drei um 120° elektrisch verschobene Wechselspannungen induziert. Diese Wechselspannungen werden mittels eines Rechteckimpulsformers 2 durch jeweils Auswertung der Nulldurchgänge der Phasenwechselspannungen in entsprechende Rechteckimpulsfolgen umgesetzt. Diese Rechteckimpulsfolgen werden in einer Vervielfacherschaltung 3 vervielfacht, anschließend wird aus diesen Impulszügen mittels eines Frequenzspannungswandlers 4 ein der Frequenz proportionales Spannungssignal erzeugt. Diese Spannung wird entweder über den elektrischen Schalter 62 — bei geöffnetem Schalter 61 — der elektronischen Schaltvorrichtung 6 direkt an den Ausgang der Einrichtung geführt oder — bei entgegengesetzter Drehrichtung — durch Schließen des elektronischen Schalters 61 und Öffnen des Schalters 62 über den Umkehrverstärker 5 an den Ausgang geführt.

Zur Ansteuerung der elektronischen Schaltvorrichtung 6 werden zwei der Sinuswechselspannungen durch Erfassung der Nulldurchgänge in Rechteckimpulsfolgen mittels eines Rechteckimpulsformers 7 umgewandelt und einer Phasenfolgelogik 8 zugeführt, die aus der Phasenfolge der beiden Rechteckimpulsfolgen das Ansteuersignal für die Schalter 61, 62 bildet. Hierdurch kann am Ausgang der Einrichtung ein der Drehzahl des Antriebes proportionales Signal, des ihr Vorzeichen je nach der Drehrichtung des Antriebes wechselt, zur Verfügung gestellt werden.

Eine Phasenfolgelogik, mit der es möglich ist, aus zwei gegeneinander verschobenen Rechteckimpulsfolgen ein entsprechendes Signal für Vorwärts- und Rückwärtsdrehrichtung zu bilden, ist beispielsweise in der Siemens-Zeitschrift Oktober 1960, Seite 669, insbesondere Bild 11, beschrieben.

## Patentansprüche

1. Einrichtung zum Erzeugen einer der Drehzahl eines Gleichstromantriebes proportionalen Spannung, die ihr Vorzeichen je nach der Drehrichtung des Antriebes wechselt, insbesondere für einen Hauptspindelantrieb einer Werkzeugmaschine, mittels einer mit dem Antrieb gekuppelten bürstenlosen Mehrphasen-Tachometermaschine, gekennzeichnet durch einen an die Statorwicklungen der Tachometermaschine angeschlossenen ersten Rechteckimpulsformer (2), einen ihm nachgeschalteten Frequenzspannungswandler (4), einen an den Frequenzspannungswandler angeschlossenen, durch elektronische Schalter (61, 62) einschaltbaren oder umgehbaren Umkehrverstärker (5), einen zweiten, ebenfalls an die Statorwicklungen (12) angeschlossenen Rechteckimpulsformer (7) und eine ihm nachgeschaltete Phasenfolgelogik (8) zur Ansteuerung der elektronischen Schalter (61, 62).

2. Einrichtung nach Anspruch 1, gekennzeichnet durch eine zwischen ersten Rechteckimpulsformer (2) und Frequenzspannungswandler (4) geschaltete Frequenzvervielfacherschaltung (3).

3. Einrichtung nach Anspruch 1, dadurch gekennzeichnet daß die Tachometermaschine (1) einen über eine Konussteckverbindung (13) auf die Antriebswelle (8) des Antriebes aufsteckbaren Rotor (11) mit Permanentmagnet aufweist, daß die Statorwicklung eine vergossene Statorwicklung (12) ist und daß die beiden Rechteckimpulsformer (2, 7) an die Statorwicklung anschließbar sind.

## Claims

1. A device for generating a voltage proportional to the speed of rotation of a d.c. drive, and which changes its symbol in dependence upon the direction of rotation of the drive, in particular for a main spindle drive of a machine tool, by means of a brushless, multiphase tachometer machine coupled to the drive, characterised by a first rectangular pulse former (2) connected to the stator windings of the tachometer machine, by a following frequency voltage transformer (4) and a reversal amplifier (5) connected to the frequency voltage transformer can be switched on or bypassed by electronic switches (61, 62), by a second rectangular pulse former (7) likewise connected to the stator windings (12), and by a phase sequence logic (8) connected following said rectangular pulse former (7), for the control of the electronic switches (61, 62).

2. A device as claimed in Claim 1, characterised by a frequency multiplier circuit (3) switched between the first rectangular pulse former (2) and the frequency voltage transformer (4).

3. A device as claimed in Claim 1, characterised in that the tachometer machine (1) has a rotor (11) which has a permanent magnet and can be mounted onto the driving shaft (8) of the drive by means of a cone stretching device (13), that the stator winding is a cast stator winding (12) and that the two rectangular pulse formers (2, 7) can be connected to the stator winding.

## Revendications

1. Dispositif pour produire une tension proportionnelle à la vitesse de rotation d'une commande à courant continu et dont le signe change avec le sens de rotation de la commande, en particulier pour une commande de broche principale d'une machine-outil, au moyen d'une génératrice tachymétrique polyphasée sans balais, qui est accouplée à la commande, caractérisé par un premier formateur d'impulsions rectangulaires (2), raccordé aux enroulements statoriques de la génératrice tachymétrique, un convertisseur fréquence-tension (4) monté à sa suite, un amplificateur inverseur (5) connecté au convertisseur fréquence-tension et pouvant être enclenché ou shunté par des interrupteurs électroniques (61, 62), un second formateur d'impulsions rectangulaires (7), également raccordé aux enroulements statoriques (12), et une logique d'ordre des phases (8) montée à sa suite pour l'attaque des interrupteurs électroniques (61, 62).

2. Dispositif selon la revendication 1, caractérisé par un circuit multiplicateur de fréquence (3) monté entre le premier formateur d'impulsions rectangulaires (2) et le convertisseur fréquence-tension (4).

3. Dispositif selon la revendication 1, caractérisé en ce que la génératrice tachymétrique (1) possède un rotor (11) à aimant permanent qui peut être enfiché par un assemblage par emboîtement à cônes (13) sur l'arbre d'entraînement (8) de la commande, que l'enroulement statorique est un enroulement statorique compoundé (12) et que les formateurs d'impulsions rectangulaires (2, 7) peuvent être raccordés à l'enroulement statorique.

FIG 1

FIG 2